Europäisches Patentamt

European Patent Office

Office européen des brevets

(19)

(11) Publication number: **0 521 737 A1**

# (12) EUROPEAN PATENT APPLICATION

(21) Application number: 92306190.7

(22) Date of filing: 06.07.92

(51) Int. Cl.$^5$: **D21H 17/67**, D21H 17/68, C09D 17/00

(30) Priority: 04.07.91 FI 913255

(43) Date of publication of application:
07.01.93 Bulletin 93/01

(84) Designated Contracting States:
AT BE CH DE DK ES FR GB GR IT LI LU MC NL PT SE

(71) Applicant: OY PARTEK AB
SF-21600 Parainen (FI)

(72) Inventor: Malmström, Olof
Stalarmsgatan 5 C 30
SF-2081 Turku (FI)
Inventor: Imppola, Olavi
Etumartinkatu 9
SF-05800 Hyvinkää (FI)

(74) Representative: Collier, Jeremy Austin Grey
J.A.Kemp & Co., 14 South Square, Gray's Inn
London WC1R 5LX (GB)

(54) **Process for increasing the solids content of a slurry used in paper manufacturing.**

(57) The solids content of precipitated calcium carbonate (PCC) slurry for use in paper manufacturing is increased by addition of a pigment. PCC is used in paper manufacturing both as a filler and as a coating pigment. The low solids content of PCC slurries makes the use of such slurries as a coating material impossible, and increases paper manufacturing costs because of the high transport costs of slurry, additional apparatus need in the paper making machines, great drying needs and therefore, great need of energy, and so on. Powder or granulated pigment and possibly dispersing agents are added to the PCC slurry used in paper manufacturing. The pigment is preferably bolus alba, natural calcium carbonate, talcum, titanium dioxide, or an equivalent. The amount of pigment added to the slurry is such that the desired solids content is obtained.

EP 0 521 737 A1

The present invention relates to increasing the solids content of a slurry to be used in paper manufacturing.

In paper manufacturing, precipitated calcium carbonate (PCC) is generally used as a slurry both as a filler and as a coating matter. When PCC is used as filler, the solids content of the slurry is not critical, but when it is used as coating material, the solids content should be rather high, at least 60% by weight. PCC is primarily used to increase the brightness and opacity of paper, and for increasing its smoothness and porosity. When used as a coating material, it adds shine to the paper. The use of PCC in paper manufacturing, and its influence on the paper, is described in an article "Use of PCC in paper manufacturing" in a magazine called "Paper and Timber" No. 72(1990):4. One problem in using PCC is caused by its solids content which, in the commercially available form of PCC is, because of its manufacturing method, very low.

PCC is chemically precipitated $CaCO_3$. It is made e.g. from burnt lime (CaO) which is slaked by making it react with water. The product thus obtained via the slaking reaction, $Ca(OH)_2$ is made to react with gases containing carbon dioxide, so that precipitated calcium carbonate (PCC) is produced. By varying the process conditions, the mineral, crystal and grain sizes can be changed and controlled according to the intended use.

The solids content of a PCC slurry obtained by the manufacturing process is usually about 10 to 20 per cent by weight, the remainder being water. Using a PCC slurry in this form causes high additional costs, and is technically difficult. First, the transport costs per tonne of solids are high because mainly water must be transported. This problem is, however, less critical in the so-called on-site installations in which the slurry can be pumped directly from the reactor to the paper manufacturing. The problem is more serious in paper mills in which bought PCC slurry is used. Secondly, a low solids content may cause technical difficulties.

In order to diminish these problems, the solids content of PCC slurries has been increased by various water-removal methods, such as by compression and sedimentation, from the low manufacturing value of 10 to 20 per cent by weight to, e.g., 65 per cent by weight. Higher solids contents than that cannot be obtained through mechanical means, because the structure of the product changes in adverse direction and it loses some of its desired properties. Using great quantities of energy, the solids content may, in fact, be raised to a desired value, but this means extremely high extra costs including both capital and operational costs. In most cases a low solids content is more appropriate, especially in practice 40 to 50 percent by weight.

When the solids content is only of the order of 40 to 50 percent by weight, it is not enough to make the PCC appropriate for coating purposes, but only for use as a filler.

Completely dry, spray-dried PCC is also used. The drying method is expensive and another drawback is the apparatus needed in dispersing the solid PCC which increases the paper manufacturing costs.

The present invention provides a process for producing a PCC slurry of increased solids content so that it can be used for paper surface treatment purposes and economically as a filler, which comprises adding to a PCC slurry a powder and/or granulated pigment.

In the process of the present invention, powdered and/or granulated pigment required in paper treatment is added to the PCC slurry. The solids content of the slurry rises in that case in direct ratio with the amount of pigment added. Suitable pigments are, for instance, natural calcium carbonate, bolus alba (kaolin), talcum and titanium dioxide. The solids content required for paper coating can be obtained in a simple manner.

The calculated quantity of powdered pigment is added to the slurry for which the desired solids content is to be obtained. The solids content should not, however be raised above 80% as the viscosity of the mixture above that value may become too high.

The pigment to be added to the PCC slurry is preferably bolus alba. When bolus alba is used with PCC in paper coating, both good shine and good paper opacity are obtained. For use as filler, natural calcium carbonate is preferably mixed with PCC, so that again both brightness and opacity are enhanced.

The pigment can be mixed with the PCC slurry while the latter is being manufactured. Alternatively, pigment can be mixed with the slurry only in the paper manufacturing mill. In the latter case, unnecessary transport costs are not avoided, because of the great quantities of water which have to be transported, but instead a desired commercially available PCC product can be selected. By mixing pigment with a PCC slurry in the manufacturing mill, customer paper mill apparatus needed for treating and dispensing different pigments can be simplified and reduced, which lowers paper manufacturing costs.

Since using PCC as a coating material requires a product in which the solids content is over 65 percent by weight, resort has been taken to spray-drying which is a very expensive solution. With the aid of the invention, sufficient solids content is provided without spray drying. When spray dried PCC is used for paper manufacturing, separate dispersion apparatus have to be used which with the present invention are not needed.

At the same time as a solids content appropriate for the PCC slurry is obtained, the known effect of the PCC is obtained on the pigments mixed in the slurry.

The following Examples illustrate the invention.

## Example 1

This Example describes raising the solids content of a PCC slurry from 57.72 percent by weight to 68 percent by weight by adding powdered bolus alba to a PCC slurry.

A PCC slurry was prepared from a PCC called OPACARB S and from bolus alba called AMAZON. The weight ratios required were 60:40, i.e. 60 parts by weight of PCC to 40 parts by weight of bolus alba. The solids content of the PCC slurry was 57.72 percent by weight and in the bolus alba, 96.61 percent by weight. The viscosity value of the PCC slurry was 165 cp. To prepare the slurry, OPACARB C PCC was used in such amount that, when calculated as solids, there were 1000 grams of it. The equivalent amount of PCC slurry is thus 1000:0.5772 = 1733 g.

This amount of solids is equivalent to 60 parts by weight, so that one part by weight = 16.7 g.

40 parts by weight of bolus alba were used, i.e. 40 x 16.7 = 667 g. The equivalent amount of wet bolus alba is 667:0.9661 = 690 g.

0.3 percent by weight of the bolus alba solids content of the dispersion agent A 41 was added, i.e. 0.003 x 667 = 2.001 g. The solids value of the dispersion agent was 41 percent by weight. The equivalent amount of the wet dispersion agent is 2.001:0.41 = 4.88 g.

The viscosity of the finished slurry was 382 cp and the solids content was 68 percent by weight.

The following table I shows the values of the above slurry and the equivalent values of two other slurries in which the weight ratios between PCC and bolus alba were 40:60 and 33:67. The viscosity value of the last mentioned slurry, marked with ∗, was too high to be measured. It was prepared on the principle that as much bolus alba as possible was added to the PCC.

## TABLE I

| Product Ratio | A 41 | 50% NaOH | Visc (cp) | Solids Content % | Total Weight | Solids Content/% of solids content |
|---|---|---|---|---|---|---|
| 60/40 | 4.88 | – | 382 | 68% | ~2428g | ~1669g -> $\frac{100.1668=68\%}{2428}$ |
| 40/60 | 10.98 | 3.0g | 855 | 75% | ~3337g | ~2505g -> $\frac{105.2505=75\%}{3337}$ |
| 33/67 | 15.00 | 4.3g | ∗ | 80% | ~3888g | ~3036g -> $\frac{100.3036=78\%}{3888}$ |

Product ratio:     Dry PCC/dry bolus alba

A 41:              Dispersion agent

50% NaOH:          Added for controlling pH value

## Example 2

The Example describes raising the solids content of a PCC slurry of 18% solids content to enable the slurry to be spread on the surface of the paper.

A PCC slurry was prepared containing 10 parts by weight of PCC and 90 parts by weight of powdered bolus alba. The PCC slurry was taken directly from the reactor and its solids content was 18%. The solids content of the bolus alba was 100 percent by weight.

10 parts by weight of PCC were prepared. The equivalent amount of wet slurry was 10:0.18 = 55.56 parts by weight. 90 parts by weight of dry bolus alba were needed.

The wet PCC and the dry bolus alba were combined, so that the slurry contained 55.56 + 90 = 145.56 parts by weight of slurry. The solids content of the slurry was (100:145.56) x 100 = 68.7 percent by weight.

If a lower or higher solids content is desired, water is added or removed. The amount of water to be added or removed is determined by simple arithmetic calculation.

Example 1 and the subsequent Table show how simply dry solids contents of 68, 75 and 80 percent by weight can be obtained. The PCC starting material was PCC slurry called OPACARB X with a solids content 57.72 percent by weight. Similarly, slurry with dry matter value below 20 percent by weight, taken directly from the reactor, can be used for the starting material. It is obvious that use of PCC taken directly from the reactor yields a remarkably less expensive PCC slurry than OPACARB S, from which water has been removed mechanically, or than a spray-dried PCC.

The advantages of the invention may be summarized as follows:

- The combined effect of the PCC and the powdered pigment enhances the quality of the paper;
- The manufacturing cost of the PCC slurry containing PCC and pigment is lower than that of a PCC slurry from which water has been removed in a conventional way;
- The paper manufacturing cost is reduced because several additional apparatus can be excluded from the paper machine;
- The transport costs of the PCC slurry can be reduced.

## Claims

1. A process for producing a PCC (= precipitated calcium carbonate) slurry of increased solids content for use in paper manufacture, which comprises adding to a PCC slurry a powder and/or granulated pigment.

2. Process according to claim 1, in which bolus alba, natural calcium carbonate, talcum, titanium dioxide and/or an equivalent pigment is added to the PCC slurry.

3. Process according to claim 1 or 2, in which the amount of pigment added to the PCC slurry is such as to raise the solids content of the slurry from 10 to 20% by weight to 40-80% by weight.

4. Process according to claim 3, in which the amount of pigment added to the PCC slurry is such that the slurry has the desired solids ratio of PCC to the pigment, and, if necessary, the desired total solids content is obtained by addition or removal of water.

5. Process according to any one of claims 1 to 4, in which the pigment is added to the PCC slurry while the slurry is being manufactured.

6. Process according to any one of claims 1 to 4, in which the pigment is added to the PCC slurry during the paper manufacturing process.

7. Process according to any one of claims 1 to 6 in which a dispersing agent is also added to the slurry.

8. The use, in the manufacture of paper, of a PCC slurry to which a pigment has been added to raise the solids content from 10 to 20% PCC to 40-80% total solids.

EP 0 521 737 A1

**European Patent Office**

# EUROPEAN SEARCH REPORT

Application Number

EP 92 30 6190

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | DATABASE JAPIO, n091-040897, ORBIT Search Service, California, US; & JP-A-3040897(MITSUBISHI PAPER) 21-02-1991 *The entire abstract* | 1-5,8 | D21H17/67 D21H17/68 C09D17/00 |
| X | US-A-4 026 762 (H.D.BAUMAN) * claims 1-6 * | 1 | |
| X | US-A-4 028 173 (R.A.OLSON) * claims 1-9 * | 1 | |

| | | | TECHNICAL FIELDS SEARCHED (Int. Cl.5) |
|---|---|---|---|
| | | | D21H C09D |

The present search report has been drawn up for all claims

| Place of search | Date of completion of the search | Examiner |
|---|---|---|
| THE HAGUE | 23 SEPTEMBER 1992 | FOUQUIER J. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)

5